# FASCICULE DE BREVET EUROPEEN

(11) **EP 1 031 453 B1**
(45) Date de publication et mention de la délivrance du brevet: **25.06.2003**
(21) Numéro de dépôt: 00400516.1
(22) Date de dépôt: 25.02.2000
(51) Int. Cl.: B60K 26/02, B60K 31/04, G05G 5/03, G05G 1/14

(54) **Dispositif de commande d'un système de régulation d'allure pour véhicule automobile**
Fahrpedal für ein Kraftfahrzeug
Vehicle accelerator pedal

(30) Priorité: 26.02.1999 FR 9902443
(43) Date de publication de la demande: 30.08.2000
(73) Titulaire: Thales, 75008 Paris (FR)
(72) Inventeur: Artis, Jean-Paul, THALES Propriété Intel., 94117 Arcueil Cedex (FR); Callac, Maurice, THALES Propriété Intel., 94117 Arcueil Cedex (FR)
(74) Mandataire: Lucas, Laurent Jacques

(56) Documents cités:
- EP-A- 0 709 245
- FR-A- 2 755 650
- US-A- 4 615 409

## Description

La présente invention concerne un dispositif de commande d'un système de régulation d'allure pour véhicule automobile. Elle s'applique notamment pour des véhicules équipés de moyens de contrôle de distance et/ou de vitesse d'obstacles situés sur la trajectoire du véhicule, et dont l'allure est régulée en fonction des informations de distances et/ou des vitesses fournies par lesdits moyens. Plus généralement, elle s'applique à tous véhicules équipés de moyens de régulation automatique de leur allure.

Il est connu d'équiper des véhicules de moyens de mesures de distance et/ou de vitesse de véhicules ou d'obstacles les précédant. Ces moyens, à base de techniques radars, optiques ou autres, permettent notamment d'effectuer une régulation automatique de vitesse des véhicules en fonction du trafic. Ils sont généralement qualifiés dans la littérature anglo-saxonne par le sigle ACC correspondant à l'expression « Automative Cruise Control ».

Ces moyens fournissent des informations qui peuvent être exploitées de différentes manières. Un cas d'exploitation simple consiste par exemple à fournir une information visuelle à suivre, au conducteur du véhicule, en cas de franchissement d'un seuil de distance de sécurité. C'est au chauffeur d'agir alors de lui-même sur le système de freinage du véhicule.

Un cas plus élaboré peut consister à mettre en oeuvre un freinage automatique par asservissement du système de freinage et/ou d'accélération du véhicule sur les informations fournies par les moyens de mesures. Dans ce cas, le conducteur n'a pas directement la maîtrise de l'allure du véhicule. Il faut cependant prévoir la possibilité de lui donner l'entière maîtrise du système de freinage et/ou d'accélération, indépendamment des informations fournies par les moyens de mesures de distance et/ou de vitesse. Pour activer ou désactiver le système de régulation automatique de son véhicule, le conducteur active généralement une commande manuelle, par exemple un traditionnel bouton-poussoir.

Dans le cas de régulation automatique d'allure couplée à un radar du type ACC, plusieurs commandes manuelles sont généralement utilisées. Une première commande manuelle de marche/arrêt, appelée encore « on/off » pour les usagers d'expression anglo-saxonne, active le système de régulation automatique d'allure. Une deuxième commande manuelle, encore appelée quelquefois « set/resume » enclenche le système de régulation automatique. En d'autres termes, le système étant en position de fonctionnement par l'action sur la commande marche-arrêt, l'enclenchement du système met en route la régulation automatique d'allure proprement dite, c'est-à-dire par exemple la commande automatique de l'accélération et/ou du freinage.

Ces commandes manuelles sont situées suivant les cas sur une manette localisée légèrement en arrière du volant ou encore sur le volant lui-même. Typiquement, pour enclencher le système de régulation d'allure automatique après l'avoir activé par le bouton-poussoir « on/off », le conducteur du véhicule agit sur le bouton-poussoir « set/resume ». Pour déclencher le système, le conducteur peut par exemple appuyer une seconde fois sur le bouton-poussoir « set/resume ». Un voyant quelquefois accompagné d'un signal sonore peut par exemple rappeler au conducteur l'état, actif ou inactif, du système de régulation automatique d'allure.

Ce mode de commande convient notamment bien à l'utilisation de la régulation d'allure automatique sur autoroute, en association par exemple avec un radar de type ACC. Dans cette configuration, les périodes de régulation automatiques d'allure sont longues et la situation de trafic est généralement dégagée. La charge de travail demandée au conducteur pour actionner les boutons-poussoirs est faible. Les situations critiques sont vues de loin par le conducteur. Il dispose en conséquence d'un temps suffisant pour réagir à ces situations, notamment pour déplacer son pied droit pour le remettre sur l'accélérateur ou le frein.

En utilisation urbaine, il n'en est plus de même. Plusieurs inconvénients apparaissent. Les périodes de conduite automatique sont courtes et le conducteur est constamment amené à reprendre la main pour gérer des situations telles que l'arrêt au feu rouge, le respect des priorités, les changements de rue ou les virages serrés par exemple. La commande du système telle décrite précédemment, au moyen de poussoirs, procure alors une charge de travail et d'attention rapidement insupportable pour le conducteur. Du point de vue de la sécurité, ce surcroît de préoccupation n'est pas favorable, et est même dangereux. En outre, le conducteur doit de plus constamment regarder son tableau de bord pour connaître l'état de son système.

Un dispositive de commande d'un système de régulation automatique d'allure ayant les caractéristiques du préambule de la revendication 1 est décrit dans le document US-A-4 615 409.

Le but de l'invention est de pallier les inconvénients précités en libérant notamment la charge de travail et d'attention du conducteur d'un véhicule équipé d'un système de régulation d'allure automatique dans certaines situations critiques. A cet effet, l'invention a pour objet un dispositif de commande d'un système de régulation automatique d'allure d'un véhicule automobile, caractérisé en ce qu'il comporte des moyens de séparation de la course de la pédale d'accélération en deux parties, l'enfoncement de la pédale dans la première partie de course enclenchant la régulation d'allure automatique d'allure, la force rappel de la pédale étant plus faible dans la première partie de course que dans la deuxième partie de course.

L'invention a pour principaux avantages qu'elle offre une grande sûreté de fonctionnement, qu'elle améliore la fiabilité de l'information sur l'état de fonctionnement du système de régulation, qu'elle améliore la sécurité du conducteur et qu'elle est simple à mettre en oeuvre.

D'autres caractéristiques et avantages de l'invention apparaîtront à l'aide de la description qui suit faite en regard de dessins annexés qui représentent
- la figure 1, par un synoptique un mode de réalisation possible d'un dispositif selon l'invention ;
- la figure 2, un exemple de réalisation possible d'un dispositif selon l'invention ;
- la figure 3, un autre exemple de réalisation possible d'un dispositif selon l'invention.

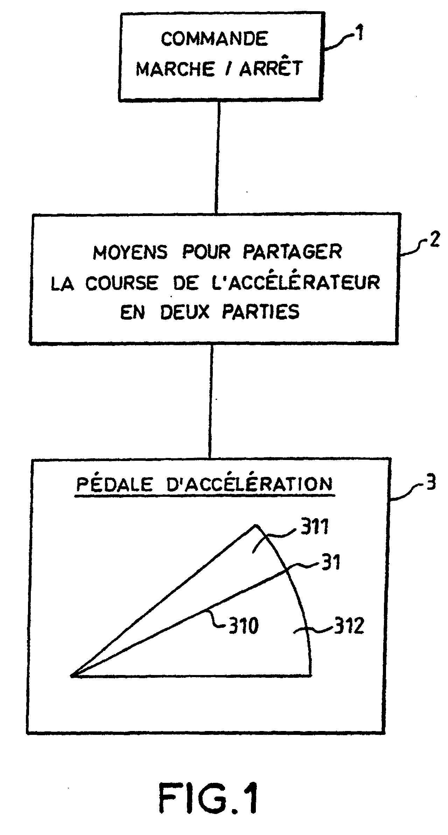

La figure 1 présente, par un synoptique, un mode de réalisation possible d'un dispositif selon l'invention. Ce dispositif permet d'assurer le passage de la régulation d'allure automatique d'un véhicule à la régulation par le conducteur, au moyen de la pédale d'accélération. La régulation d'allure automatique est réalisée par des moyens connus. A titre d'exemple, ces moyens comportent par exemple un calculateur associé à un radar du type ACC, qui détecte les distances et/ou vitesses des véhicules précédant son porteur, et des interfaces de commande qui agissent sur le système d'accélération et de freinage. En fonction des données fournies par le radar, le calculateur envoie des ordres de commandes aux interfaces. Un asservissement de la vitesse du véhicule, via son système de freinage et d'accélération, est réalisé pour, par exemple, maintenir une distance minimum entre le véhicule porteur et le véhicule qui le précède immédiatement.

Selon l'invention, quand le système de régulation automatique est mis en état de fonctionnement, par exemple par un commutateur de marche/arrêt, des moyens mécaniques partagent la course totale de l'accélérateur en deux parties. La première partie de course est de préférence plus courte que la deuxième partie de course. La force de rappel associée à la première partie de course est plus faible que la force de rappel associée à la deuxième partie de course, de sorte que le conducteur sente nettement le passage d'une partie à l'autre avec son pied. La première partie de course de la pédale d'accélération a par exemple pour effet d'enclencher le système de régulation automatique. La deuxième partie de course, la pédale d'accélération permet d'accélérer au-delà de la consigne du système de régulation d'allure automatique, pour permettre notamment des manoeuvres ou une conduite plus rapide que le système ne l'autorise en mode automatique.

Ainsi, comme l'illustre la figure 1, en aval d'une commande de marche-arrêt 1, un dispositif selon l'invention comporte des moyens 2 pour partager la course de la pédale d'accélération 3 en deux parties. La commande de marche-arrêt a par exemple la forme d'un bouton-poussoir ou toute autre forme, et est par exemple disposée sur le tableau de bord du véhicule. Par l'activation de cette commande, le système de régulation automatique d'allure est mis en état de fonctionner. Il ne fonctionne réellement que lorsqu'il a reçu un ordre supplémentaire d'enclenchement. La mise en marche, par activation de la commande marche-arrêt 1 met par exemple le calculateur du système de régulation et ses interfaces de commande associées sous tension. Elle met par exemple aussi le radar en marche. Une mise à l'arrêt, par action sur cette commande marche-arrêt 1, permet de même de désactiver le système de régulation, c'est-à-dire de le mettre hors d'état de fonctionner, par exemple par la mise hors tension des éléments du système de régulation d'allure automatique.

Lorsque la commande marche-arrêt active ce système de régulation, les moyens 2 précités partagent la course 31 de la pédale d'accélération 3 en deux parties 311, 312. La première partie de course 311 étant de préférence plus faible que la deuxième partie de course 312, elle est par exemple de l'ordre du quart de la course totale de la pédale d'accélération. Les moyens 2 pour partager les deux parties de course distinguent ces dernières par au moins deux caractéristiques.

Selon une première caractéristique, la première partie de course 311 a pour effet d'enclencher le système de régulation d'allure automatique, alors que dans la deuxième partie de course 312, le système étant par exemple toujours enclenché, c'est la commande d'accélération venant de la pédale d'accélération 3 qui prend le pas sur la commande d'accélération venant de la régulation automatique d'allure. En d'autres termes, lorsque le pied du conducteur, posé sur la pédale d'accélérateur 3, enfonce la pédale de frein légèrement, dans la limite de la première partie de course 311, le système de régulation automatique d'allure s'enclenche. L'allure du véhicule, sa vitesse, son accélération et son freinage sont alors notamment commandés automatiquement, par ce système. Si la situation nécessite une accélération plus forte que celle qui est demandée par ce système, le conducteur enfonce la pédale de frein au-delà de la première partie course. Dans la deuxième partie de la course 312, c'est l'accélération produite par la pédale d'accélérateur qui détermine l'accélération, qui va au-delà de l'accélération prévue par le système de régulation. Le conducteur peut alors réaliser des manoeuvres ou des conduites plus rapides que celles autorisées par le système de régulation automatique d'allure.

Selon une deuxième caractéristique, les moyens 2 pour partager les deux parties de course, différencient les forces de rappel de la pédale d'accélération associées à chacune de ces courses, de façon notamment à ce que le conducteur sente nettement la limite 310 entre les deux parties de course. Il est en effet important qu'il sache s'il a ou non la maîtrise de l'accélération. De préférence, la force de rappel de la pédale 3 est plus forte dans la deuxième partie de course 312 que dans la première partie de course 311. La force de rappel est par exemple nettement plus forte de façon à ce que le conducteur sente très nettement le passage d'une partie à l'autre.

Ainsi, le système de régulation étant activé par une action préalable, par exemple par une commande marche-arrêt, le conducteur enclenche ce système par un léger enfoncement de la pédale d'accélération. Du fait notamment de la force de rappel liée à la deuxième partie de course, il réalise parfaitement où arrêter son action pour ne pas prendre le pas sur l'accélération commandée par le système. En cas d'urgence, il appuie naturellement sur la pédale d'accélération, au-delà de la première course, pour atteindre l'accélération souhaitée.

L'invention convient ainsi notamment très bien à une conduite en environnement urbain, faite d'une suite d'arrêts, de ralentissement et d'accélération subits. Elle permet en particulier à un conducteur de retrouver ses réflexes habituels, à savoir appuyer sur l'accélérateur pour avancer et passer son pied de l'accélérateur au frein pour ralentir ou arrêter. Le système de régulation étant toujours activé, le retour de la pédale de frein dans sa première partie de course puis éventuellement au repos, laisse la commande de régulation automatique reprendre le pas, aux ordres de freinages près le cas échéant.

Durant les périodes de conduites automatiques, le pied droit du conducteur est fixe et repose par exemple sur la butée intermédiaire de la pédale d'accélération. Cette butée intermédiaire est la limite 310 entre les deux courses, là où la force de rappel de la pédale devient supérieure à celle de la première course. Le conducteur n'a alors pas à réfléchir pour savoir où il met son pied, ni pour savoir dans quel état est le système de régulation automatique d'allure. Il peut reprendre instantanément et de manière très naturelle la main dans des situations dangereuses ou le nécessitant, par exemple pour le respect de feux ou de priorités.

Lorsque la commande marche-arrêt, disposée par exemple sur le tableau de bord du véhicule, est mise en position arrêt, les moyens pour partager la course de la pédale d'accélération en deux parties deviennent inactifs. La pédale d'accélération 3 retrouve sa fonction normale de contrôle du couple moteur, sur toute sa course.

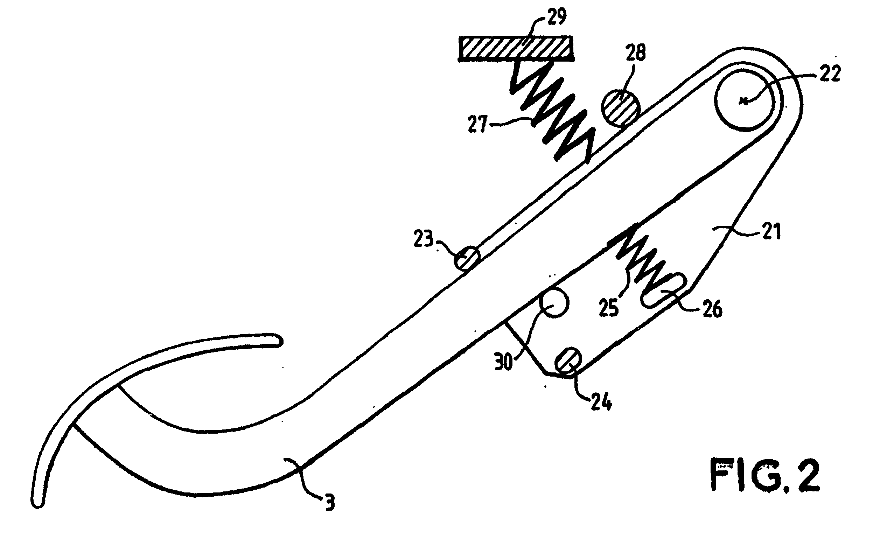

La figure 2 illustre un exemple de réalisation possible d'un dispositif selon l'invention. Il comporte notamment une chape 21. Cette dernière a un axe de rotation 22, commun à la pédale d'accélération 3. La pédale 3 a alors un degré de liberté en rotation par rapport à la chape 21. La pédale 3 est libre en rotation entre deux butées de la chape 21, une butée haute 23 et une butée basse 24. Un premier ressort de rappel 25 maintient la pédale 3 au contact de la butée haute 23, en l'absence de pression sur la pédale d'accélérateur 3, de la part du conducteur du véhicule. A cet effet, le ressort de rappel 25 est par exemple placé entre la pédale 3 et une partie 26 fixe par rapport à la chape 21, située en dessous de la pédale. Il exerce alors une force de rappel tendant à s'étendre, c'est-à-dire qu'il travaille en extension.

Un deuxième ressort de rappel 27 tend à ramener la chape 21 vers le haut, pour la maintenir au contact d'une butée 28 lorsqu'elle est au repos. A cet effet, le deuxième ressort de rappel est par exemple relié d'une part à la chape 21 et à une partie 29 fixe par rapport au châssis du véhicule, le ressort travaillant alors en compression.

Un premier capteur, non représenté, permet de mesurer la position de la chape 21 par rapport au châssis du véhicule. Un deuxième capteur, non représenté, permet de mesurer la position de la pédale 3 par rapport à la chape 21. Ces capteurs sont par exemple de type potentiométrique, c'est-à-dire que le déplacement de la chape pour l'un, et le déplacement de la pédale pour l'autre, modifient la résistance d'un potentiomètre. Les capteurs délivrent ainsi une tension ou un courant proportionnel aux déplacements. La position mesurée par le deuxième capteur, associé à la chape 21, commande par exemple l'accélération du véhicule, l'accélération étant fonction de la mesure du capteur de façon connue par ailleurs.

Le dispositif selon l'invention, tel qu'illustré par la figure 2, comporte par ailleurs par exemple un élément commandable 30 qui bloque la pédale 3 vers la butée haute 23 de la chape 21. On laisse la pédale libre entre les deux butées 23, 24 selon la position de l'élément commandable. La position de cet élément commandable dépend notamment de l'état de la commande marche-arrêt 1. Cet élément commandable est par exemple le pêne d'un verrou, sa position étant commandée par un électro-aimant.

Lorsque la commande marche-arrêt est en position arrêt, c'est-à-dire lorsque le système de régulation d'allure automatique n'est pas activé et donc pas en état de fonctionnement, l'élément commandable 30 bloque la pédale 3 vers la butée haute 29 de la chape. Cet élément maintient en fait la pédale fixe par rapport à la chape. Si l'élément commandable est le pêne d'un verrou, il est par exemple en position bloquée, en l'absence d'excitation du verrou, c'est-à-dire en l'absence de courant dans l'électro-aimant. La pédale 3 est alors fixe par rapport à la chape, entre la butée haute 23 et l'élément commandable. Les mouvements du pied du conducteur sur la pédale 3 sont intégralement retransmis à la chape 21. Le capteur potentiométrique, placé entre la chape et le châssis du véhicule permet alors la commande normale du couple moteur. La pédale est rappelée en position haute, vers la butée 28 par l'effet du deuxième ressort de rappel 27.

Lorsque la commande marche-arrêt 1 est en position de marche, le système de régulation automatique d'allure est activé. Dans cette position, la commande marche-arrêt 1 commande par ailleurs le déplacement de l'élément commandable 30 de façon à débloquer la pédale 3 et la laisser libre entre les deux butées 23, 24 de la chape. Si l'élément commandable 30 est le pêne d'un verrou commandé par un électro-aimant, la commande marche-arrêt 1 à l'état de marche agit par exemple sur un circuit d'alimentation de la bobine de l'électro-aimant de sorte que celle-ci soit parcourue par un courant 1. Le passage de ce courant 1 dans la bobine maintient alors le pêne en retrait de façon à libérer la pédale de frein 3. Cette dernière est alors mobile entre les deux butées 23, 24 de la chape, seulement rappelée vers la butée haute 23 de la chape sous l'action du premier ressort de rappel 25.

Le déplacement de la pédale d'accélération 3 par rapport à la chape 21 réalise l'enclenchement du système de régulation automatique d'allure. Le capteur potentiométrique qui mesure alors le déplacement de la pédale d'accélération 3 par rapport à la chape transforme par exemple cette information mécanique en une information électrique. A cet effet, selon un circuit électrique connu, le capteur potentiométrique délivre une tension ou un courant I qui évolue, par sa variation de résistance, jusqu'à franchir un seuil de tension ou de courant. Un circuit de comparaison compare par exemple la valeur de sortie du capteur potentiométrique avec la valeur de seuil donnée. Cette comparaison peut être réalisée par des circuits numériques ou analogiques. L'ordre d'enclenchement ainsi réalisé est par exemple pris en compte par un circuit qui met en marche la régulation d'allure automatique. L'accélération et/ou le freinage est alors pris en compte automatiquement par le système. Par son deuxième ressort de rappel 27, dont la force est supérieure au premier ressort de rappel 25, le dispositif selon l'invention permet par exemple à la pédale d'accélération de servir de repose-pied. Si le conducteur veut imposer son accélération, il enfonce alors plus fortement son pied sur l'accélérateur qui rentre dans sa deuxième partie de course.

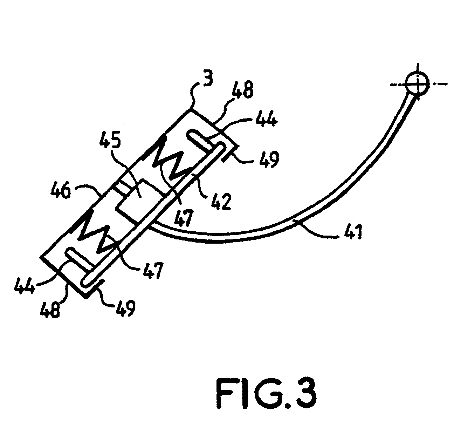

La figure 3 présente un autre mode de réalisation possible d'un dispositif selon l'invention. Les moyens pour partager la course de la pédale d'accélération en deux parties comportent un support 42, par exemple un plateau, qui est lié rigidement à la branche 41 de la pédale d'accélération 3 du véhicule, en étant par exemple partie intégrante de la branche 41. Les moyens pour partager la course de la pédale d'accélération comportent par exemple une enveloppe 46 dont la face supérieure forme la pédale d'accélération proprement dite, plus particulièrement le support d'accueil du pied du conducteur.

L'enveloppe 46 est solidaire mécaniquement du support 42, et mobile par rapport à ce dernier. Elle est maintenue dans une position haute par une force de rappel, en l'absence de pression exercée par le pied du conducteur. Cette force de rappel est inférieure à celle qui est associée à la branche 41 de la pédale d'accélération, de sorte que lorsque le conducteur pose le pied sur l'enveloppe par exemple jusqu'à une butée 44, la branche 41 de la pédale d'accélération n'est pas activée, en restant sensiblement immobile et ne provoquant ainsi pas d'accélération. Le déplacement de l'enveloppe 46 par rapport au support 42 correspond à la première partie de course de la pédale de d'accélération 3.

L'enveloppe 46 est par exemple maintenue en position haute par un ou plusieurs ressorts de rappel 47 disposés entre l'intérieur de cette enveloppe et le support 42. L'enveloppe 46 est mobile entre la position haute, en l'absence du pied du conducteur, et une position où elle atteint une butée 44 solidaire du support 42. En enfonçant alors l'enveloppe plus en avant, le conducteur agit alors sur la branche 41 de la pédale d'accélération 3. Le mouvement de cette branche active alors l'accélération du véhicule, et correspond à la deuxième partie de la course de la pédale d'accélération 3. La force de rappel de l'enveloppe 46 est de préférence nettement inférieure à la force de rappel de la branche 41, pour que le pied du conducteur puisse par exemple se reposer sur l'enveloppe sans que l'accélération soit activée par la pédale. Un capteur de déplacement 45 est par exemple placé entre l'intérieur de l'enveloppe 46 et le support 42. Ce capteur peut être un interrupteur ou un commutateur, qui a par exemple la forme d'un bouton-poussoir. Ce dernier, monté par exemple en série avec un circuit électrique envoie alors un ordre de mise en marche au système de régulation automatique d'allure. Il est bien sûr possible d'utiliser un capteur potentiométrique comme dans l'exemple de réalisation précédent. Dans cet exemple, il est aussi possible d'utiliser un capteur du type commutateur pour envoyer un ordre de mise en marche, relativement au déplacement de la pédale d'accélération dans la première partie de course.

Pour faciliter le déplacement de l'enveloppe 46 par rapport au support 42, la partie de cette dernière qui accueille le pied du conducteur et qui est par exemple en forme de plateau, se prolonge par exemple perpendiculairement vers le support. Ce dernier se déplace alors le long de la partie 48 ainsi prolongée. Un léger jeu est prévu entre le support 42 et cette partie 48 de façon à guider le mouvement de l'enveloppe 46. De préférence, l'enveloppe comporte une partie supplémentaire 49 qui se rabat pour couvrir plus ou moins le support, de telle sorte que le mouvement de l'enveloppe vers le haut est retenue par cette partie rabattue 49. Ainsi, le déplacement de l'enveloppe par rapport au support est limité vers le bas par la butée 44 et est limité vers le haut par la partie d'enveloppe rabattue 49. Un mode de réalisation plus simple peut par exemple consister à ne garder de l'enveloppe 46 que sa partie supérieure, celle qui est au contact du pied du conducteur et formant la face supérieure de la pédale d'accélération.

Les exemples de réalisation présentés en regard des figures 2 et 3 ont des moyens 2 de partage de la course de la pédale d'accélération qui sont mécaniques. Il est possible d'envisager des moyens de partage de la course de la pédale d'accélération qui ne sont pas mécaniques, mais par exemple électroniques ou optiques. Un capteur mesure alors la position de la pédale. Jusqu'à un angle de déplacement donné de la pédale, correspondant à sa première course, un ordre de mise en marche de la régulation automatique d'allure est créé. A partir de cet angle de déplacement, à partir duquel commence la deuxième course de la pédale, la mesure de déplacement effectuée par le capteur est alors par exemple transformée en un ordre d'accélération. Il est encore possible de prévoir une autre réalisation où pendant la première partie de course, déterminée par le capteur, la commande d'accélération produite par la pédale, soit désactivée par un système commandé à partir des signaux fournis par le capteur.

Il est à noter que les moyens 2 pour partager la course de la pédale d'accélération peuvent être activés dès l'ordre de mise en marche du système de régulation. Dans ce cas, le verrou 30 du mode de réalisation illustré par la figure 2 peut par exemple être supprimé.

L'invention a notamment comme avantages qu'elle est simple à réaliser. La modification entraînée sur le système d'accélération n'est en effet pas très important. Elle permet par ailleurs une grande sûreté de fonctionnement. En particulier, dans le mode de réalisation de la figure 2, en l'absence d'alimentation de l'électro-aimant de commande du pêne 30, la pédale d'accélération reste bloquée entre la butée haute 23 de la chape et le pêne. La maîtrise de l'accélération est alors totalement rendue au conducteur. Il en est de même de façon plus générale en cas de panne quelconque d'alimentation électrique.

L'invention permet par ailleurs d'accroître la sécurité du conducteur et de ses passagers. En effet, la première course de l'accélérateur, associée à un ressort de rappel 25 de force inférieure, et de préférence nettement inférieure, à la force de rappel du ressort associé à la deuxième course, qui correspond en particulier à la force de rappel de l'accélérateur en phase d'accélération normale, en l'absence d'automatisme, informe clairement le conducteur sur l'état du système. Il sait, par cette première partie de course que le système de régulation automatique est actif. Cette information tactile est plus fiable qu'une information visuelle que le conducteur ne peut regarder en permanence. Par ailleurs elle offre plus de sécurité car ne détourne pas l'attention visuelle du conducteur. Elle est aussi plus fiable et plus sécurisée qu'une indication sonore, qui peut être notamment couverte par le bruit ambiant et même perturber le conducteur.

Enfin, l'invention permet un confort de conduite au conducteur. En particulier, durant les périodes de conduite automatique, le pied droit du conducteur peut être reposé sur la butée intermédiaire de la pédale d'accélération. Le conducteur n'a pas à réfléchir pour savoir où il met son pied, ni pour savoir dans quel état est son système. Il peut reprendre instantanément et de manière très naturelle la main dans les situations dangereuses ou critiques.

Il est à noter que l'invention permet par ailleurs un réglage de la consigne de vitesse par la pédale d'accélération. En effet, un enfoncement de la pédale d'accélération dans la première partie de course 311 enclenchant le système de régulation d'allure, il est possible de prévoir par cette première partie de course un réglage de la consigne de vitesse entre la valeur zéro et une valeur présélectionnée. Ce réglage de consigne peut se faire par exemple en fonction du degré d'enfoncement de la pédale d'accélération 3 à l'intérieur de la première partie de course 311, la vitesse de consigne augmentant avec le degré d'enfoncement. La valeur de consigne est par exemple alors donnée par le capteur potentiométrique, où tout autre moyen, mesurant le déplacement de la pédale par rapport à la chape. Cette valeur de consigne est par exemple prise en compte par le système de régulation lors d'une phase d'initialisation, par exemple après la commande d'enclenchement du système. Des changements de consigne de vitesse peuvent néanmoins être prévus en fonctionnement. Il est alors nécessaire de prévoir un signal indiquant au système de régulation qu'il doit prendre en compte le degré d'enfoncement de la pédale, par exemple la valeur du capteur potentiométrique associé qui représente ce degré d'enfoncement.

Enfin, la pédale d'accélération 3 et la chape 21 ont été présentées accomplissant des mouvements de rotation. Le principe de réalisation de la figure 2 pourrait s'appliquer néanmoins dans un cas de mouvements rectilignes. Par ailleurs, l'invention a été présentée en relation avec une pédale d'accélération, activée par le pied. Elle peut néanmoins s'appliquer à un autre moyen d'accélération, du type pédale ou non, activé par un autre organe que le pied, par exemple la main.

Les moyens de mesure de distance et/ou de vitesse évoqués précédemment faisaient appel à des techniques radar. L'invention est bien sûr applicable pour d'autres moyens de détection, par exemple à base de techniques optiques.

## Revendications

1. Dispositif de commande d'un système de régulation automatique d'allure d'un véhicule automobile, comportant des moyens (2, 21) de séparation de la course de la pédale d'accélération (3) en deux parties (311, 312), la force rappel de la pédale (3) étant plus faible dans la première partie de course (311) que dans la deuxième partie de course (312), **caractérisé en ce que** l'enfoncement de la pédale dans la première partie de course (311) enclenche la régulation d'allure automatique.

2. Dispositif selon la revendication 1, **caractérisé en ce que** la deuxième partie de course (312) commande l'accélération du véhicule.

3. Dispositif selon l'une quelconque des revendications précédentes, **caractérisé en ce que** les moyens de séparation de la course de la pédale d'accélération (3) en deux parties (311, 312) comportent une chape (21) munie d'une butée haute (23) et d'une butée basse (24), la pédale (3) étant mobile entre ces deux butées (23, 24), le déplacement de la chape (21) commandant l'accélération du véhicule, la première partie de course (311) étant constituée par le déplacement de la pédale (3) par rapport à la chape (21) et la deuxième partie de course (312) étant constituée par le déplacement de la chape (21).

4. Dispositif selon la revendication 3, **caractérisé en ce que** la pédale d'accélération (3) est maintenue fixe par rapport à la chape (21) lorsque le système de régulation d'allure n'est pas activé.

5. Dispositif selon la revendication 4, **caractérisé en ce que** la pédale est maintenue vers la butée haute (23) par un élément commandable (30).

6. Dispositif selon la revendication 5, **caractérisé en ce que** l'élément commandable (30) est le pêne d'un verrou commandé par un électro-aimant.

7. Dispositif selon la revendication 6, **caractérisé en ce que** le pêne (30) est en position de blocage de la pédale d'accélération (3) par rapport à la chape (21) lorsque l'électro-aimant n'est pas parcouru par un courant.

8. Dispositif selon l'une quelconque des revendications 3 à 7, **caractérisé en ce que** la pédale d'accélération (3) étant rappelée vers la butée haute (23) de la chape par un premier ressort (25) et la chape étant rappelée vers le haut par un deuxième ressort (27), le premier ressort (25) possède une force de rappel inférieure à celle du deuxième ressort (27).

9. Dispositif selon l'une quelconque des revendications 3 à 8, **caractérisé en ce qu'**il comporte un capteur qui mesure le déplacement de la chape (21), l'accélération du véhicule étant fonction de la mesure.

10. Dispositif selon l'une quelconque des revendications 3 à 9, **caractérisé en ce qu'**il comporte un capteur qui mesure le déplacement de la pédale d'accélération (3) par rapport à la chape (21), la mesure d'un déplacement étant à la base d'un ordre d'enclenchement du système de régulation automatique.

11. Dispositif selon l'une quelconque des revendications 1 ou 2, **caractérisé en ce que** les moyens de séparation de la course de la pédale d'accélération en deux parties comportent un premier support (46) formant la face supérieure de la pédale d'accélération et un deuxième support (42) lié rigidement à la branche (41) de la pédale d'accélération dont le mouvement active l'accélération du véhicule, le premier support étant mobile par rapport au deuxième support selon une force de rappel inférieure à celle associée à la branche (41).

12. Dispositif selon la revendication 11, **caractérisé en ce que** la force de rappel du premier support (46) est créée par au moins un ressort de rappel (47) disposé entre les deux supports (42, 46) de façon à maintenir le premier support vers le haut en l'absence de pression de la part du conducteur sur ce dernier.

13. Dispositif selon l'une quelconque des revendications 11 ou 12, **caractérisé en ce qu'**un capteur (45) est placé entre la face intérieure du premier support (46) et le deuxième support (42), le capteur créant une information de mise en route par détection du mouvement du premier support (46) par rapport au deuxième support (42).

14. Dispositif selon la revendication 13, **caractérisé en ce que** le capteur (45) est un commutateur du type poussoir.

15. Dispositif selon l'une quelconque des revendications 11 à 14, **caractérisé en ce que** le premier support (46) se prolonge perpendiculairement vers le deuxième support (42) pour guider son mouvement par rapport à ce dernier.

16. Dispositif selon l'une quelconque des revendications précédentes, **caractérisé en ce qu'**il comporte des moyens de mesure du degré d'enfoncement de la pédale d'accélération (3), cette mesure déterminant la consigne de vitesse du véhicule.

## Patentansprüche

1. Vorrichtung zum Steuern eines Systems zum automatischen Regeln der Geschwindigkeit eines Kraftfahrzeugs, mit Mitteln (2, 21) zum Aufteilen des Hubs des Gaspedals (3) in zwei Teile (311, 312), wobei die Rückholkraft des Pedals (3) im ersten Teil des Hubs (311) kleiner als im zweiten Teil des Hubs (312) ist, **dadurch gekennzeichnet, daß** das Niederdrücken des Pedals im ersten Teil des Hubs (311) das automatische Regeln der Geschwindigkeit auslöst.

2. Vorrichtung nach Anspruch 1, **dadurch gekennzeichnet, daß** der zweite Teil des Hubs (312) das Beschleunigen des Fahrzeugs steuert.

3. Vorrichtung nach einem der vorangehenden Ansprüche, **dadurch gekennzeichnet, daß** die Mittel zum Aufteilen des Hubs des Gaspedals (3) in zwei Teile (311, 312) eine Abdeckung (21) aufweisen, die mit einem oberen Anschlag (23) und einem unteren Anschlag (24) versehen ist, wobei das Pedal (3) zwischen diesen beiden Anschlägen (23, 24) beweglich ist, wobei die Verschiebung der Abdeckung (21) das Beschleunigen des Fahrzeugs steuert, wobei der erste Teil des Hubs in der Verschiebung des Pedals (39) in bezug auf die Abdeckung (21) und der zweite Teil des Hubs in der Verschiebung der Abdeckung (21) bestehen.

4. Vorrichtung nach Anspruch 3, **dadurch gekennzeichnet, daß** das Gaspedal (3) in bezug auf die Abdeckung (21) fest gehalten ist, wenn das System zum Regeln der Geschwindigkeit nicht aktiviert ist.

5. Vorrichtung nach Anspruch 4, **dadurch gekennzeichnet, daß** das Pedal zum oberen Anschlag (23) von einem steuerbaren Element (30) gehalten wird

6. Vorrichtung nach Anspruch 5, **dadurch gekennzeichnet, daß** das steuerbare Element (30) der Schnapper eines Riegels ist, der von einem Elektromagnet gesteuert wird.

7. Vorrichtung nach Anspruch 6, **dadurch gekennzeichnet, daß** der Schnapper (30) in einer Stellung des Arretierens des Gaspedals (3) in bezug auf die Abdeckung (21) ist, wenn der Elektromagnet keinen Strom führt.

8. Vorrichtung nach einem der Ansprüche 3 bis 7, **dadurch gekennzeichnet, daß**, da das Gaspedal zum oberen Anschlag (23) der Abdeckung von einer ersten Feder (25) und die Abdeckung von einer zweiten Feder (27) nach oben zurückgeholt wird, die erste Feder (25) eine Kraft besitzt, die geringer ist als die der zweiten Feder (27).

9. Vorrichtung nach einem der Ansprüche 3 bis 8, **dadurch gekennzeichnet, daß** sie einen Sensor aufweist, der die Verschiebung der Abdeckung (21) mißt, wobei die Beschleunigung des Fahrzeugs von der Messung abhängig ist.

10. Vorrichtung nach einem der Ansprüche 3 bis 9, **dadurch gekennzeichnet, daß** sie einen Sensor aufweist, der die Verschiebung des Gaspedals (3) in Bezug auf die Abdeckung (21) mißt, wobei die Messung einer Verschiebung die Basis für ein Befehl zum Auslösen des automatischen Regelsystems ist.

11. Vorrichtung nach einem der Ansprüche 1 oder 2, **dadurch gekennzeichnet, daß** die Mittel zum Aufteilen des Hubs des Gaspedals in zwei Teile einen ersten Träger (46) aufweisen, der die Oberseite des Gaspedals bildet, und einen zweiten Träger (42), der mit dem Schenkel (41) des Gaspedals starr verbunden ist, dessen Bewegung die Beschleunigung des Fahrzeugs bewirkt, wobei der erste Träger zum zweiten Träger gemäß einer Rückholkraft beweglich ist, die kleiner ist als diejenige ist, die dem Schenkel (41) zugeordnet ist.

12. Vorrichtung nach Anspruch 11, **dadurch gekennzeichnet, daß** die Rückholkraft des ersten Trägers (46) von mindestens einer Rückholfeder (47) erbracht ist, die zwischen den beiden Trägern (42, 46) angeordnet ist, so daß, wenn der Fahrer keinen Druck auf den ersten Träger ausübt, dieser nach oben gehalten wird.

13. Vorrichtung nach einem der Ansprüche 11 oder 12, **dadurch gekennzeichnet, daß** ein Sensor (45) zwischen die Innenseite des ersten Trägers (46) und den zweiten Träger (42) eingesetzt ist, wobei der Sensor eine Information über das Ingangsetzen durch Erfassen der Bewegung des ersten Trägers (46) in bezug auf den zweiten Träger (42) erbringt.

14. Vorrichtung nach Anspruch 13, **dadurch gekennzeichnet, daß** der Sensor (45) ein Schalter vom Typ Druckschalter ist.

15. Vorrichtung nach einem der Ansprüche 11 bis 14, **dadurch gekennzeichnet, daß** sich der erste Träger (46) senkrecht zum zweiten Träger (42) verlängert, um seine Bewegung in bezug auf diesen zu führen.

16. Vorrichtung nach einem der vorangehenden Ansprüche, **dadurch gekennzeichnet, daß** sie Mittel zum Messen des Grades des Niedertretens des Gaspedals (3) umfaßt, wobei diese Messung die Sollgeschwindigkeit des Fahrzeugs bestimmt.

## Claims

1. Device for controlling a system for automatically regulating the speed of a motor vehicle comprising means (2, 21) for splitting the travel of the accelerator pedal (3) into two parts (311, 312), the return force of the pedal (3) being weaker in the first part of the travel (311) than in the second part of the travel (312), **characterized in that** the depression of the pedal in the first part of the travel (311) triggers the automatic regulation of the speed.

2. Device according to Claim 1, **characterized in that** the second part of the travel (312) commands the acceleration of the vehicle.

3. Device according to any one of the preceding claims, **characterized in that** the means for splitting the travel of the accelerator pedal (3) into two parts (311, 312) comprise a yoke (21) equipped with a top stop (23) and a bottom stop (24), the pedal (3) being able to move between these two stops (23, 24), the movement of the yoke (21) commanding acceleration of the vehicle, the first part of the travel (311) consisting of the movement of the pedal (3) with respect to the yoke (21) and the second part of the travel (312) consisting of the movement of the yoke (21).

4. Device according to Claim 3, **characterized in that** the accelerator pedal (3) is kept fixed with respect to the yoke (21) when the speed regulating system is not activated.

5. Device according to Claim 4, **characterized in that** the pedal is kept towards the top stop (23) by a controllable element (30).

6. Device according to Claim 5, **characterized in that** the controllable element (30) is the locking bolt of a latch controlled by an electromagnet.

7. Device according to Claim 6, **characterized in that** the locking bolt (30) is in the position of immobilizing the accelerator pedal (3) with respect to the yoke (21) when no current flows through the electromagnet.

8. Device according to any one of Claims 3 to 7, **characterized in that**, with the accelerator pedal (3) returned towards the top stop (23) of the yoke by a first spring (25) and with the yoke returned upwards by a second spring (27), the first spring (25) has a weaker return force than the second spring (27).

9. Device according to any one of Claims 3 to 8, **characterized in that** it comprises a sensor which measures the movement of the yoke (21), the acceleration of the vehicle being a function of the measurement.

10. Device according to any one of Claims 3 to 9, **characterized in that** it comprises a sensor which measures the movement of the accelerator pedal (3) with respect to the yoke (21), the measuring of a movement underlying a command to trigger the automatic regulation system.

11. Device according to either one of Claims 1 and 2, **characterized in that** the means for splitting the travel of the accelerator pedal into two parts comprise a first support (46) forming the upper face of the accelerator pedal and a second support (42) connected rigidly to the branch (41) of the accelerator pedal, the movement of which activates the accelerating of the vehicle, the first support being able to move with respect to the second support with a return force weaker than that associated with the branch (41).

12. Device according to Claim 11, **characterized in that** the return force of the first support (46) is created by at least one return spring (47) arranged between the two supports (42, 46) such as to keep the first support upwards when the driver is not pressing thereon.

13. Device according to either one of Claims 11 and 12, **characterized in that** a sensor (45) is placed between the inner face of the first support (46) and the second support (42), the sensor creating start-up information by detecting the movement of the first support (46) with respect to the second support (42).

14. Device according to Claim 13, **characterized in that** the sensor (45) is a switch of the push-button type.

15. Device according to any one of Claims 11 to 14, **characterized in that** the first support (46) is extended at right angles towards the second support (42) to guide its movement with respect to the latter.

16. Device according to one of the preceding claims, **characterized in that** it comprises means for measuring the extent to which the accelerator pedal (3) is depressed, this measurement determining the vehicle speed set point.
